(19) Europäisches Patentamt

European Patent Office

Office européen des brevets

(11) **EP 0 725 957 B1**

(12) **FASCICULE DE BREVET EUROPEEN**

(45) Date de publication et mention de la délivrance du brevet:
**01.03.2000 Bulletin 2000/09**

(51) Int Cl.⁷: **G06T 15/70**

(86) Numéro de dépôt international:
**PCT/FR95/01019**

(21) Numéro de dépôt: **95926989.5**

(22) Date de dépôt: **28.07.1995**

(87) Numéro de publication internationale:
**WO 96/07162 (07.03.1996 Gazette 1996/11)**

(54) **PROCEDE DE GENERATION D'IMAGE DE SYNTHESE**

VERFAHREN ZUR ERZEUGUNG VON SYNTHESEBILD

SYNTHESIS IMAGE GENERATING PROCESS

(84) Etats contractants désignés:
**DE ES FR GB IT**

(30) Priorité: **30.08.1994 FR 9410413**

(43) Date de publication de la demande:
**14.08.1996 Bulletin 1996/33**

(73) Titulaire: **Thomson Broadband Systems
29608 Brest (FR)**

(72) Inventeurs:
• **CHUPEAU, Bertrand
F-92402 Courbevoie Cédex (FR)**

• **BLONDE, Laurent
F-92402 Courbevoie Cédex (FR)**
• **DUSSEUX, Jean-Christophe
F-92402 Courbevoie Cédex (FR)**
• **BORDES, Philippe
F-92402 Courbevoie Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 461 577          US-A- 4 600 919**

EP 0 725 957 B1

**Description**

La présente invention concerne un procédé de génération d'image de synthèse, en particulier pour la génération de séquences d'images.

Il s'agit du domaine de la synthèse d'image par ordinateur, images monoculaires pour une visualisation sur un écran conventionnel, binoculaires ou stéréoscopiques pour une visualisation en relief dans des applications de type images virtuelles.

Le but de tels procédés est de réduire le coût de calcul des séquences d'image générées.

Les solutions connues consistent à réduire le volume de calculs demandés en limitant de façon homogène dans le domaine temporel et spatial les informations traitées par un algorithme de rendu qui permet de réaliser une image en 2 dimensions à partir des données de structure modélisant la scène en 3 dimensions à visualiser. La diminution du coût de calcul se fait alors inévitablement au détriment du réalisme de la séquence ainsi générée.

L'étape suivante dans la réduction de coût de calcul, également connue, est une interpolation temporelle recréant des images intermédiaires à partir d'images clés, seules images calculées à partir de l'algorithme de rendu. La génération de telles images est généralement basée sur l'exploitation de vecteurs vitesse calculés d'une image à l'autre à partir de ces images et donc basée sur une estimation de déplacement des pixels de l'image.

Dans tous ces cas d'interpolation, qu'il s'agisse de simples répétitions d'images ou de méthodes plus complexes telles que filtrages spatio-temporels, des effets de saccades et d'échos sont créés, dus au fait que ni le mouvement individuel d'objets de la scène, ni celui du point d'observation n'est pris en compte. L'interpolation temporelle génère des images "estimées" donc pas toujours de bonne qualité.

La présente invention a pour but de réduire de telles dégradations d'images synthétisées.

A cet effet et selon l'invention, le procédé de génération d'image de synthèse à partir de données de structure modélisant une scène en 3 dimensions à visualiser et de données représentant une évolution apparente relative de la scène par rapport à un point de vue les données de structure permettant de calculer des coordonnées de points de la scène en 3 dimensions et les données d'évolution permettant de calculer des coefficients de transformations géométriques associées à ces points, où l'on génère, à partir des données de structure et d'un algorithme de rendu une image en deux dimensions représentant la scène vue de ce point de vue, est caractérisé en ce qu'on associe à chaque point de l'image en 2 dimensions un point correspondant de la scène en trois dimensions et un vecteur déplacement représentant l'évolution de ce point d'image due à l'évolution apparente relative du point correspondant de la scène en 3 dimensions par rapport au point de vue, on calcule ensuite les vecteurs de déplacement des pixels de l'image générée à partir des coordonnées et des coefficients des points associés de la scène en 3 dimensions pour les utiliser dans la génération d'au moins une autre image en 2 dimensions à partir de la première, puis on présente les images générées sur un écran de visualisation.

Il a également pour objet l'exploitation de champs de vecteurs vitesse apparente inverses pour l'interpolation temporelle et de champ de vecteurs disparité pour une extrapolation d'image générant une paire stéréoscopique. Il a aussi pour objet la génération d'une séquence stéréoscopique à partir des vecteurs d'extrapolation et d'interpolation.

L'invention concerne donc aussi bien la génération de séquences monoculaires que stéréoscopiques.

Les avantages obtenus grâce a cette invention sont une réduction du coût de calcul d'une image ou d'une séquence d'images monoculaire ou stéréoscopique, une meilleure qualité d'image et donc un fort réalisme de la scène par un calcul plus fiable et plus simple des vecteurs d'interpolation temporelle ou d'extrapolation spatiale pour une image stéréoscopique, une gestion de zones apparaissantes et disparaissante pour réaliser l'interpolation à partir de l'image d'arrivée ou de départ, une gestion des conflits de projection des vecteurs d'interpolation en fonction de la distance des points correspondant de la scène en 3 dimensions au point d'observation, une génération d'une des 2 voies stéréoscopiques à partir des vecteurs d'extrapolation d'une voie.

En résumé, alors que dans l'art antérieur on générait d'abord au moins deux images clés successives en deux dimensions, grâce à un algorithme de rendu, puis on calculait des images intermédiaires en effectuant une interpolation entre deux de ces image clés, avec des difficultés importantes pour faire correspondante les points caractéristiques des deux images, l'invention propose de générer des images supplémentaires à partir d'une image clé obtenue par l'algorithme de rendu et à partir de vecteurs de déplacement calculés directement à partir des données d'évolution (rotations, translations, changement de focale) de la scène en trois dimensions.

D'autres particularités et avantages de l'invention apparaîtront clairement dans la description suivante donnée à titre d'exemple non limitatif et faite en regard des figures annexées qui représentent :

- la figure 1 l'algorithme de génération d'une séquence d'images monoculaire,
- la figure 2, la carte des vecteurs vitesse apparente d'une image clé $K_{(t)}$,
- la figure 3, une projection d'un point de la scène 3D sur le plan focal,
- la figure 4, la superposition "d'images" permettant d'obtenir un champ de vecteurs vitesse,
- la figure 5, l'algorithme de calcul de l'interpolation temporelle,

- la figure 6, une projection de vecteurs vitesse sur l'image intermédiaire,
- la figure 7, un conflit de projection sur l'image intermédiaire,
- la figure 8, une classification des zones "apparaissantes" et "disparaissantes",
- la figure 9, une séquence stéréoscopique,
- la figure 10, l'algorithme de génération de la séquence stéréoscopique,
- la figure 11, une zone masquée d'une image clé de la voie de droite,
- la figure 12, la détermination du vecteur disparité.

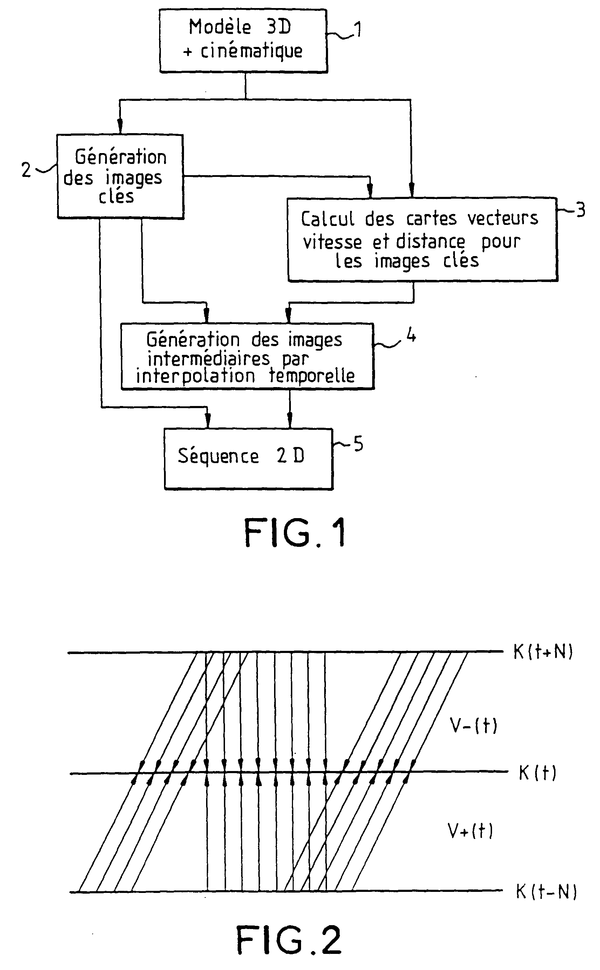

Le schéma de la figure 1 représente un algorithme d'accélération de la synthèse d'images dans le cas de séquences d'images animées monoculaires.

Les données exploitées, relatives à la scène en 3 dimensions (3D) objet de la séquence d'images animées et disponibles à l'entrée 1 de l'algorithme sont des informations sur la structure de la scène en 3 D modélisée et sur sa cinématique.

Dans une étape 2, ces informations sont traitées par un algorithme de rendu pour générer un nombre limité d'images dans la séquence appelées images clés. Une étape 3 calcule, à partir des paramètres d'animation qui sont les données sur la cinématique de la scène et des images clés générées lors de l'étape 2, une carte des vecteurs vitesse et distance. Elle affecte ainsi à chaque pixel (i, j) de l'image clé K(t) un vecteur vitesse apparente $V^+$ (i, j, t) correspondant au déplacement de ce pixel de l'image clé précédente K(t-N) à cette image clé K(t) et un vecteur vitesse apparente $V^-$ (i, j, t) correspondant au déplacement de ce pixel de l'image K(t) à l'image K(t + N) ou plus exactement l'inverse de ce vecteur déplacement. Ces vecteurs vitesse peuvent être assimilés à des vecteurs déplacement représentant l'évolution des pixels d'une image à l'autre pendant l'intervalle de temps séparant deux images clés consécutives.

La figure 2 illustre la définition des 2 champs des vecteurs vitesse apparente $V^+$ et $V^-$ représentant la carte vecteur de l'image clé K(t), vecteurs correspondant au déplacement apparent entre 2 images clés si l'unité temporelle est l'intervalle entre deux images clés. Le champ vecteur V-(t) représente le déplacement de tous les pixels de l'image clé K(t) depuis l'image clé suivante K(t + N) jusqu'à l'image clé K(t) et le champ de vecteurs $V^+$(t) représente le déplacement de tous les pixels de l'image clé K(t) depuis l'image clé précédente K(t - N) jusqu'à l'image clé K(t).

Pour chaque pixel, cette étape calcule également la distance de son point correspondant dans la scène en trois dimensions au point d'où est vue la scène, c'est-à-dire à la caméra fictive qui est supposée filmer la scène. Cette valeur est représentative de la distance minimale dans la direction définie par l'élément d'image (pixel) entre la scène et la caméra puisque dans le cas d'éléments cachés c'est le plus proche de la caméra qui est pris en compte. Cette valeur peut également provenir de l'étape 2 de génération d'images lorsque la technique de génération des images clés est basée sur des méthodes de type "tampon de profondeur" qui gèrent la projection d'information 3 D dans le plan image en stockant, pour chaque élément d'image, une valeur représentative de cette distance minimale. Dans ce cas, la carte distance provient directement de l'étape 2.

. Calcul de la vitesse apparente.

Avant de passer à l'étape suivante 4, on expose ci-après la méthode de calcul de la vitesse apparente de chaque pixel d'une image clé.

Le calcul de la vitesse apparente, c'est-à-dire la vitesse de déplacement du pixel de l'image dans le plan image et relativement au point d'où est vue la scène en trois dimensions est réalisé à partir du modèle de la scène en trois dimensions.

En théorie, le mouvement apparent (2D) est la projection du mouvement réel 3D sur le plan focal de la caméra (plan image). Le modèle de projection le plus communément utilisé en synthèse d'images est le modèle de projection plane (projection perspective de type sténopé ou "pinhole").

Dans le cas où un autre modèle de projection est utilisé, la formulation du calcul du mouvement est à adapter en conséquence.

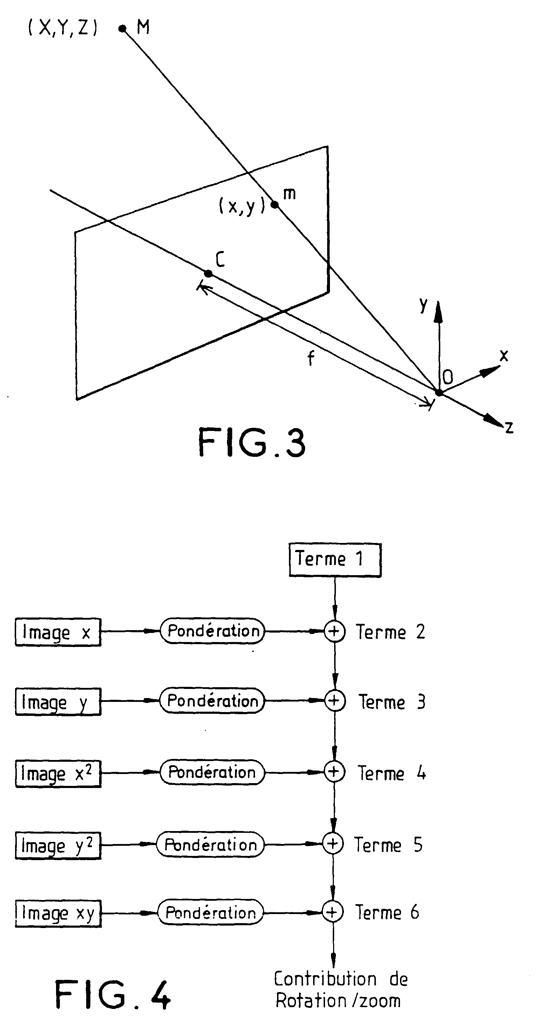

Afin de définir le modèle sténopé, représentons figure 3 les points et paramètres suivants ;

P            le plan de projection, sur lequel on projette l'image 3D
(O,x,y,z,)   le repère de projection à l'instant t, (centre O et axes Ox, Oy, Oz)
f            la "distance focale" correspondant au plan de projection, c'est-à-dire la distance entre le centre de projection O et le plan de projection P
M(X,Y,Z)     un point de l'espace 3D, de coordonnées X, Y, Z dans le repère (o, x, y, z)
m(x,y)       la projection de M dans le plan de projection, le plan de projection P étant supposé perpendiculaire à l'axe oz.
C            le projeté du centre O dans le plan P, définissant un repère d'origine pour le point m(x,y) dont les coordonnées sont (x,y) par rapport à ce repère d'origine.

La relation de base de ce modèle de projection est :

$$\overrightarrow{Om} = \frac{f}{\overrightarrow{OM.} \cdot \overrightarrow{Oz}} \overrightarrow{OM}$$

Ce qui est équivalent dans le repère (O, x, y, z) à :

$$\begin{cases} x = \dfrac{X.f}{Z} \\ y = \dfrac{Y.f}{Z} \\ z = f \end{cases}$$

Une formulation au premier ordre se définit de la manière qui suit :

On recherche un vecteur déplacement (dx, dy) pour chaque pixel en fonction du déplacement (dX, dY, dZ) du point scène M par rapport au centre de projection et en fonction de la variation de focale df.

On obtient par dérivation les équations (Eq. 1) :

$$\frac{dx}{x} = \frac{df}{f} + \frac{dX}{X} - \frac{dZ}{Z}$$

$$\frac{dy}{y} = \frac{df}{f} + \frac{dY}{Y} - \frac{dZ}{Z}$$

la distance Z est connue pour chaque pixel à partir de la carte des distances.

Connaissant, à partir des informations d'animation c'est-à-dire des données sur la cinématique de la scène, la transformation géométrique ($R_{dt}$, $T_{dt}$) pour un point $M_o$ de la scène 3 D pendant l'intervalle dt, on peut écrire :

$$\overrightarrow{OM_{dt}} = R_{dt} \cdot \overrightarrow{OM_o} + \overrightarrow{T_{dt}} \Leftrightarrow \overrightarrow{dOM_o} = \begin{bmatrix} dX \\ dY \\ dZ \end{bmatrix} = \overrightarrow{M_O M_{dt}} = [R_{dt} - I] \cdot \overrightarrow{OM_o} + \overrightarrow{T_{dt}}$$

avec :

| | |
|---|---|
| $\overrightarrow{OM_o}$ : | vecteur représentant un point spécifique de la scène 3D, de position $M_o$ à l'instant t |
| $\overrightarrow{OM_{dt}}$ : | vecteur représentant la position de ce point spécifique à un instant t + dt |
| $\overrightarrow{dOM}$ ou $\overrightarrow{M_o M_{dt}}$ : | vecteur représentant le déplacement de ce point pendant l'intervalle de temps dt |
| $R_{dt}$ : | matrice de rotation pour ce point pendant l'intervalle dt. |
| $\overrightarrow{T_{dt}}$ : | vecteur translation pour ce point pendant l'intervalle dt. |
| I: | matrice identité |

$$\overrightarrow{OM_0} = \frac{Z}{f}\begin{bmatrix} x \\ y \\ f \end{bmatrix} \qquad R_{dt} = \begin{bmatrix} \alpha_x & \beta_x & \gamma_x \\ \alpha_y & \beta_y & \gamma_y \\ \alpha_z & \beta_z & \gamma_z \end{bmatrix} \qquad \overrightarrow{T_{dt}} = \begin{bmatrix} T_x \\ T_y \\ T_z \end{bmatrix}$$

En développant on obtient :

$$\begin{cases} dX = \dfrac{Z}{f}\big[(\alpha_x - 1)x + \beta_x y + \gamma_x f\big] + T_x \\[2mm] dY = \dfrac{Z}{f}\big[\alpha_y x + (\beta_{y-1})y + \gamma_y f\big] + T_y \\[2mm] dZ = \dfrac{Z}{f}\big[\alpha_z x + \beta_z y + (\gamma_z - 1)f\big] + T_z \end{cases}$$

L'introduction de ces valeurs dans (Eq. 1) donne :

$$\begin{cases} dx = \dfrac{xdf}{f} + \big[(\alpha_x - 1)x + \beta_x y + \gamma_x f\big] + \dfrac{fT_x}{Z} - \dfrac{x}{f}\big[\alpha_z x + \beta_z y + (\gamma_z - 1)f\big] - \dfrac{xT_z}{Z} \\[2mm] dy = \dfrac{ydf}{f} + \big[\alpha_y x + (\beta_y - 1)y + \gamma_y f\big] + \dfrac{fT_y}{Z} - \dfrac{y}{f}\big[\alpha_z x + \beta_z y + (\gamma_{z-1})f\big] - \dfrac{yT_z}{Z} \end{cases}$$

L'ensemble (dx,dy) représente le vecteur déplacement qu'on associe selon l'invention à chaque point (x,y) de l'image en deux dimensions pour pouvoir créer, à partir de cette image (générée par l'algorithme de rendu), d'autres images. Les coefficients qui interviennent pour calculer ce vecteur déplacement à partir des coordonnées x et y de chaque point sont tirés des données d'évolution (rotation, translation, variation de focale) du point correspondant dans la scène à visualiser. Ces coefficients représentent l'évolution apparente relative de la scène par rapport à un point de vue. Il s'agit d'une évolution apparente relative car non seulement les éléments de la scène peuvent évoluer les uns par rapport aux autres, mais aussi, la distance focale peut évoluer, et la position relative de la caméra par rapport à la scène peut évoluer.

On verra que l'évolution se situe normalement dans le temps pour créer des séquences d'images successives, mais dans en cas particulier l'évolution sera spatiale pour créer deux images à un même instant, vues de deux points de vue différents. Le vecteur déplacement (dx, dy) a donc deux utilisations possibles, très différentes l'une de l'autre, ces deux utilisations pouvant être combinées. Dans la première il sera appelé "vecteur vitesse" et et dans le deuxième "vecteur disparité".

Ces formules montrent que dx et dy peuvent être décomposés en fonction des neuf termes

$$\left[ 1, x, y, x^2, y^2, xy, \frac{1}{Z}, \frac{x}{Z}, \frac{y}{Z} \right]$$

dont ils sont combinaison linéaire.

Excepté le premier qui est constant, ces neuf termes varient spatialement soit de façon totalement déterminée dans l'image (pour les six premiers), soit en fonction de la scène observée (termes en $\frac{1}{Z}$).

Les coefficients sont les suivants :

| N° | | dx | dy |
|---|---|---|---|
| 1 | 1 | $\gamma_x f$ | $\gamma_y f$ |

(suite)

| N° | | dx | dy |
|---|---|---|---|
| 2 | $x$ | $\frac{df}{f}+(\alpha_x-1)-(\gamma_z-1)$ | $\alpha_y$ |
| 3 | $y$ | $\beta_x$ | $\frac{df}{f}+(\beta_{y-1})-(\gamma_z-1)$ |
| 4 | $x^2$ | $-\frac{\alpha_z}{f}$ | 0 |
| 5 | $y^2$ | 0 | $-\frac{\beta_z}{f}$ |
| 6 | $xy$ | $-\frac{\beta_z}{f}$ | $-\frac{\alpha_z}{f}$ |
| 7 | $\frac{1}{Z}$ | $fT_x$ | $fT_y$ |
| 8 | $\frac{x}{Z}$ | $-T_z$ | 0 |
| 9 | $\frac{y}{Z}$ | 0 | $-T_z$ |

L'ensemble des six premiers termes (1 à 6) représente la contribution au mouvement apparent d'un effet de rotation/zoom de la caméra relativement à la scène. En effet, en supposant le point M fixe, une rotation du repère de projection Ox, Oy, Oz, simulant une rotation de caméra, modifie les coordonnées x, y du projeté m(x,y). De même, une modification de la distance focale f entre le centre de projection O et le plan de projection P, simulant une variation de distance focale de la camera modifie les coordonnées x, y du projeté m d'un point d'image fixe M(X,Y,Z).

Les composantes du vecteur déplacement dx, dy peuvent être calculées pour chaque point à partir des formules ci-dessus.

Elles peuvent aussi être calculées par des méthodes de traitement global d'image : on peut créer des images comportant des points de coordonnées x, y et attribuer à chaque point une "luminance" et une "couleur". Par exemple la luminance représente la contribution de la rotation/zoom (termes 1 à 6 du tableau), tandis que la couleur représente la contribution des termes 7 à 9. Par des méthodes de traitement global d'images, on pourra calculer globalement pour tous les points x, y des valeurs de vecteurs déplacement.

Ainsi, pour évaluer la contribution de l'effet rotation/zoom on peut réaliser une combinaison linéaire avec les pondérations correspondant au tableau ci-dessus entre six images dont la luminance est une fonction affine de 1, x, y, $x^2$, $y^2$ et xy.

Cette procédure est représentée sur la figure n° 4.

Les trois derniers termes (7 à 9) du tableau ci-dessus sont non nuls dans le cas d'une translation 3D entre la scène et la caméra. Dans ce cas, l'information de distance de chaque point de la scène 3D à représenter doit être exploitée comme explicité ci-après.

Dans le cas d'une scène statique, observée par une caméra mobile, les valeurs de $T_x$, $T_y$ et $T_z$ sont constantes pour l'ensemble des points de la scène et sont représentatives du déplacement en translation repère de projection, le plan de projection P étant supposé solidaire du repère.

Pour obtenir la contribution de cette translation au champ de mouvement apparent, il faut combiner linéairement trois signaux images dont la luminance est construite respectivement à partir de l'information $\frac{1}{Z}$, $\frac{x}{Z}$ et $\frac{y}{Z}$ pour chaque pixel.

L'image $\frac{1}{Z}$ peut être obtenue à partir de l'information contenue dans une mémoire des distances, ci-après appelée Z-buffer, par l'application d'une table de conversion adéquate.

$\frac{x}{Z}$ et $\frac{y}{Z}$ sont obtenus respectivement en multipliant pixel à pixel cette image $\frac{1}{Z}$ par les images x et y.

Dans le cas où la scène est dynamique, les valeur de $T_x$, $T_y$ et $T_z$ ne sont plus constantes pour l'ensemble des points de la scène et une synthèse d'image à partir du modèle 3D de la scène est nécessaire. Il faut passer par une étape d'assignation d'un champ de translation 3D aux points de la scène, suivie d'une étape de projection de ces translations 3D dans le plan image. Pour cela, il s'agit d'affecter une "couleur" à chaque sommet d'une scène, cette couleur étant représentative de la translation individuelle de ce sommet dans l'espace. La propagation de cette information sommet à l'ensemble de la scène est approximée par une interpolation linéaire de la couleur sur la surface des objets par exemple en utilisant un algorithme de type "Gouraud".

Afin d'obtenir les termes $\frac{T_x}{Z}$, $\frac{T_y}{Z}$ et $\frac{T_z}{Z}$ l'information de "couleur" ci-dessus, affectée dans l'espace 3D, est tout d'abord projetée dans le plan image à l'aide d'un algorithme projectif de synthèse d'image similaire à l'algorithme de rendu puis le signal est multiplié par les signaux $\frac{1}{Z}$, $\frac{x}{Z}$ et $\frac{y}{Z}$ et pondéré par les coefficients adéquats afin d'obtenir les termes 7 à 9.

Par ces combinaisons d'images porteuses des valeurs des termes constitutifs du module des vecteurs vitesse apparente sont déduits les vecteurs vitesse de l'image clé. Ceci, si l'intervalle de temps dt est celui séparant 2 images clés. Sinon, il est toujours possible de se ramener à cet intervalle en considérant que le mouvement entre 2 images clés est linéaire et à vitesse constante. Les vecteurs sont attribués aux pixels de l'image clé K(t) en considérant la scène 3D à cet instant t et à l'instant t+dt pour les vecteurs V- et t-dt pour les vecteurs V+. Pour les vecteurs V+, c'est la transformation géométrique permettant de passer de l'instant t-dt à t qui est exploitée pour chacun des points de la scène correspondant aux pixels de l'image clé K(t).

Revenons maintenant à l'algorithme de la figure 1. L'étape 4 d'interpolation temporelle succédant à l'étape 3 que l'on vient de décrire et détaillée ci-après, permet de créer les images intermédiaires manquantes entre deux images clés. A l'étape 5, ces images intermédiaires sont ensuite insérées entre les images clés générées à l'étape 2 pour réaliser la séquence d'images monoculaire.

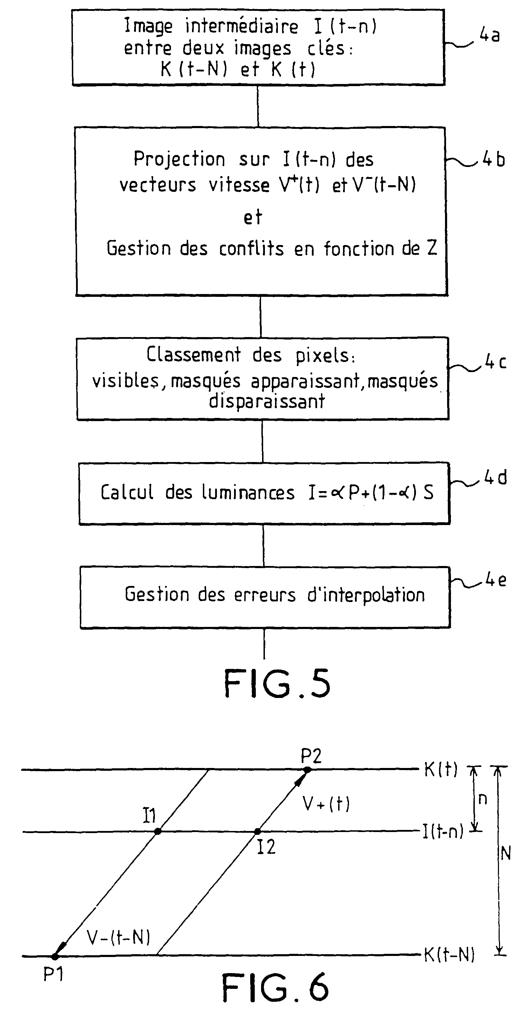

La figure 5 détaille l'étape 4 de la figure 1, concernant l'interpolation temporelle, en étapes 4a à 4e. Une étape 4a définit l'image intermédiaire qui va être reconstituée, image appelée I(t-n) située entre deux images clés appelées K(t) et K(t-N).

L'étape 4b réalise une projection des vecteurs vitesse V+(t) de l'image clé K(t) dans leur direction opposée sur l'image intermédiaire définie et sur l'image clé K(t-N) et une projection des vecteurs vitesse V-(t-N) de l'image clé K(t-N) dans leur direction opposée sur l'image intermédiaire et sur l'image clé K(t). Les projections sont représentée sur la figure 6 pour un point d'image P1 de l'image K(t-N) et un point d'image P2 de l'image clé K(t).

Les pixels de l'image intermédiaire correspondant aux vecteurs V- et V+ projetés, soit I1 et I2, sont les pixels les plus proches des points de projections, l'image étant définie sur une grille de pixels.

Ainsi, si N INT (NEAREST INTEGER) désigne la valeur entière la plus proche et correspond donc à un point de la grille d'échantillonnage spatial, on a :

$$I_1 = N \text{ INT } (P1 - \frac{N - n}{N} \times V^-)$$

$$I_2 = N \text{ INT } (P2 - \frac{n}{N} \times V^+)$$

$I_1$, $I_2$, $P_1$ et $P_2$ sont les coordonnées des points sur la grille, $V^-$ et $V^+$ les modules des vecteurs vitesse.

Cette étape 4b procède également, lors de cette projection, à la gestion des conflits.

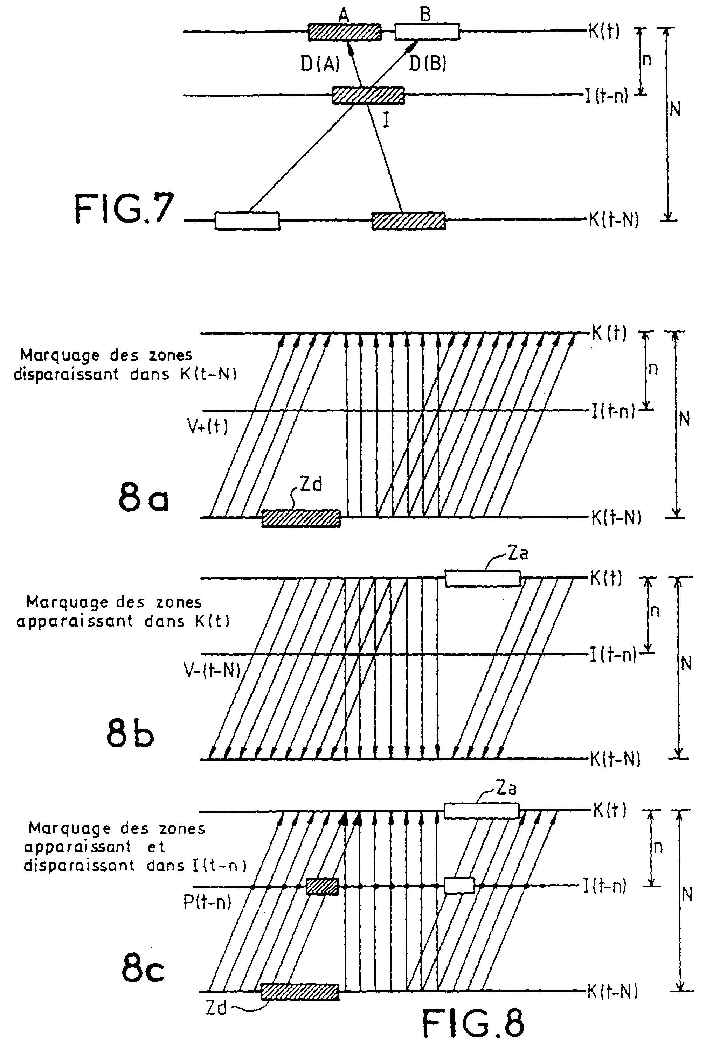

Les deux champs de vecteurs V+(t) et V-(t-N) sont balayés systématiquement. Il y a conflit lorsque deux vecteurs vitesse significativement différents se projettent en un même point I de I(t-n). Cela se produit en particulier dans le cas d'un objet fin en avant-plan, en déplacement (relatif) par rapport à l'arrière-plan : il faut alors choisir le vecteur correspondant à l'objet le plus proche de la caméra, dans ce cas l'objet en avant-plan . L'information de distance à la caméra étant connue en chaque pixel des images clés, elle est par conséquent associée également à chaque vecteur vitesse projeté : le vecteur portant l'information de distance (Z) la plus faible est alors choisi et cette information de distance est mémorisée au point I, de façon à régler les éventuels futurs conflits en ce même point interpolé. Sur l'exemple de la figure 7, l'objet A est plus proche de la caméra que B (Z(A)<Z(B)), c'est donc le vecteur D(A) qui est effectivement projeté en I.

Lorsque les deux champs de vecteurs ont été entièrement balayés, il est possible qu'il subsiste des pixels de I(t-n) sans vecteur vitesse projeté : on leur affecte un vecteur vitesse par interpolation des vecteurs projetés dans le voisinage.

L'étape 4c réalise ensuite un classement des pixels interpolés.

Les pixels de l'image intermédiaire I(t-n) sont répartis en trois classes, suivant qu'ils sont visibles dans les deux images clés K(t-N) et K(t) ("normal"), visibles dans K(t-N) et masqués dans K(t) ("disparaissant") ou bien au contraire masqués dans K(t-N) et visibles dans K(t) ("apparaissant"). L'étiquetage des pixels de I(t-n) se fait en deux temps :

- Etiquetage des images clés par projections inverses, le long de leur trajectoire, de V+(t) et V-(t-N) sur respectivement K(t-N) et K(t) : comme illustré figure 8, les pixels sans vecteur projeté ("trous") correspondent aux zones (Zd, fig. 8a) qui vont être recouvertes pour K(t-N) (pixels disparaissants) et aux zones (Za, fig. 8b) qui ont été découvertes pour K(t) (pixels apparaissants) (on a pris l'exemple d'un objet fixe en premier plan et d'un arrière-plan mobile).
- Etiquetage de l'image intermédiaire par l'examen de l'étiquette des zones de K(t) et K(t-N) sur lesquelles pointent les vecteurs effectivement projetés sur I(t-n), ce qui revient à projeter les étiquettes "apparaissant" et "disparaissant" sur l'image intermédiaire.

L'étape 4d suivante calcule les luminances des pixels I de l'image intermédiaire par interpolation des luminances des pixels P et S des images K(t-N) et K(t) correspondant au vecteur de projection choisi pour I

En termes de luminance :

$$I = \alpha \times P + (1 - \alpha) \times S$$

où $\alpha$ prend les valeurs suivantes :

$$\alpha = \frac{n}{N} \text{ si I est étiqueté "normal"}$$

n et N étant définis par le fait que l'on considère la n ième image intermédiaire avant K(t) et que les images clés K(t) et K(t-N) sont séparés par (N-1) images intermédiaires.

$\alpha = 0$ si I est étiqueté "apparaissant'

$\alpha = 1$ si I est étiqueté "disparaissant".

Enfin la dernière étape 4e permet de gérer les erreurs d'interpolation.

Dans des applications de synthèse rapide à bas coût, les éventuelles erreurs d'interpolation ne peuvent être que prédites, sans avoir recours à l'algorithme de rendu pour le vérifier. Ces erreurs sont prévisibles en premier lieu dans les zones où il a fallu combler un trou dans le champ de vecteurs vitesse, ce qui traduit une défaillance du modèle simple de déplacement et de structure utilisé. On peut étendre ces zones d'incertitude à tous les pixels des images intermédiaires pour lesquels $V^+(t)$ et $V^-(t-N)$ ne sont pas cohérents. On en déduit un masque prévisionnel des erreurs et l'on applique l'algorithme de rendu pour synthétiser les pixels correspondants.

Le procédé et les calculs précédents peuvent également être exploités pour la génération d'images pour une séquence binoculaire ou stéréoscopique.

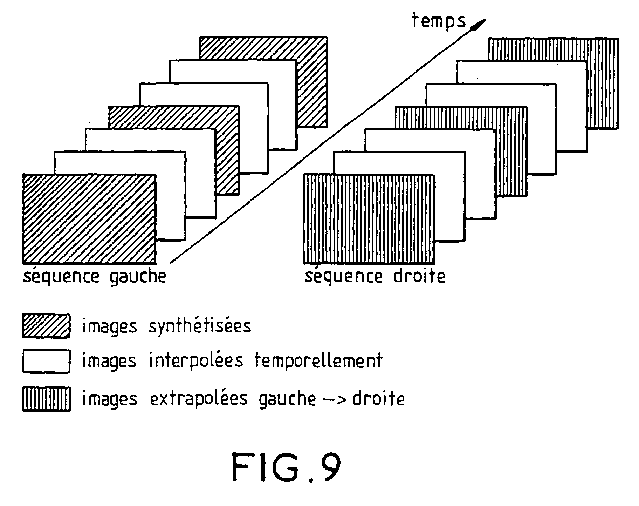

La figure 9 représente les images clés et intermédiaires générées pour une séquence gauche et pour une séquence droite, ces 2 voies stéréoscopiques permettant d'obtenir la visualisation en relief.

La génération par exemple de la séquence gauche est identique à la génération d'une séquence monoculaire telle que décrite précédemment. Sur la figure, deux images intermédiaires sont interpolées entre deux images clés consécutives représentées en noir et le gain de temps de calcul est alors d'un rapport 3 sur l'image de gauche. Les images clés de la séquence de droite apparaissant hachurées verticalement sont, quant à elles, extrapolées des images clés de la séquence de gauche comme explicité plus loin et les images intermédiaires sont calculées à partir de ces nouvelles images clés. Si le temps correspondant à l'extrapolation est négligeable devant celui de mise en oeuvre de l'algorithme de rendu permettant de générer les images clés de la voie de gauche, le gain de temps de calcul est alors d'un rapport 6 dans l'exemple présenté.

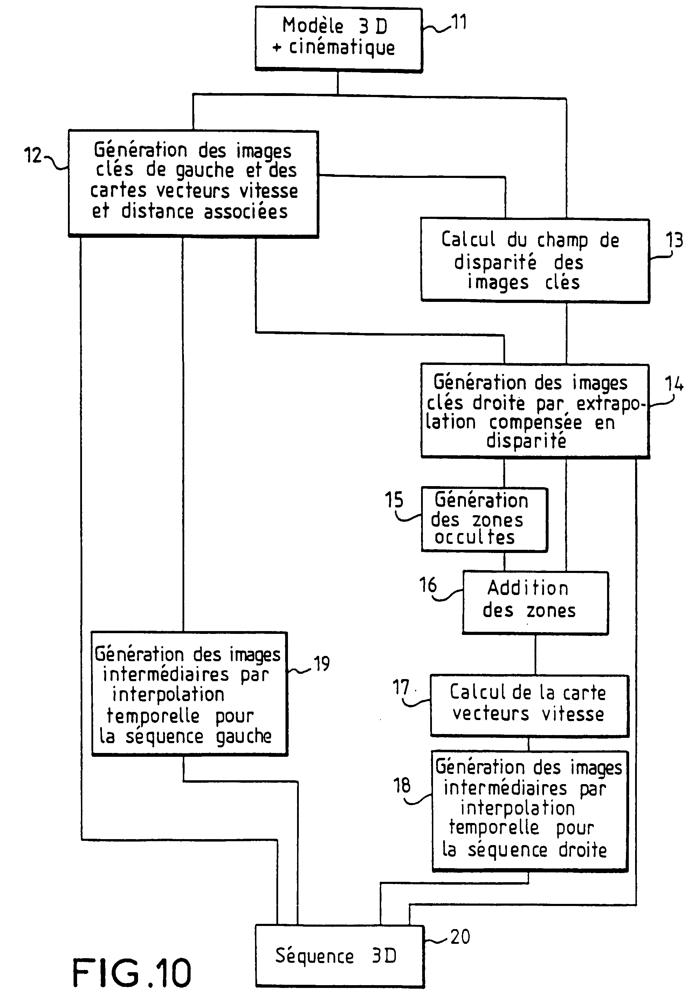

Ce procédé d'accélération de la génération de séquences binoculaires d'images de synthèse par extrapolation est décrit à l'aide du diagramme de la figure 10.

A partir des données du modèle de scène 3D et de sa cinématique disponibles en entrée 11, sont calculées les images clés, les champs de vecteurs vitesse apparente et de distance correspondant à ces images pour la séquence monoculaire, par exemple de gauche, de la même manière qu'à l'étape 2 et 3 de la figure 1 pour une génération de séquences monoculaires, c'est ici l'étape 12. Elle exploite donc, entre autres, les algorithmes de rendus pour la génération des images clés.

L'étape 13 traite les données calculées en l'étape 12 et celles du modèle 3 D disponibles en l'entrée 11 pour réaliser un calcul de vecteurs appelés vecteurs disparité.

Un point réel de la scène 3 D est projeté en des points de coordonnées différentes sur l'image de droite et de gauche. En effet, le centre de projection O' utilisé pour l'image de droite est décalé par rapport au centre de projection O utilisé pour l'image de gauche ; ce décalage correspondant à un déplacement apparent de la scène statique en 3D par rapport au centre de projection O. C'est ce qui réalise l'effet stéréoscopique, et pour chaque pixel de coordonnées $i_g$, $j_g$ de l'image de gauche correspond un pixel de coordonnées $i_d$, $j_d$ de l'image de droite. Le vecteur disparité est le vecteur translation d'un pixel de coordonnées $i_d$, $j_d$ vers le pixel de coordonnées $i_g$, $j_g$. C'est un vecteur déplacement affecté à chaque pixel de l'image d'origine et représentant l'évolution de l'image lors du déplacement du point de projection.

D'une autre manière, on peut dire que le vecteur disparité binoculaire $D(i_g, j_g)$ affecté à l'image clé de la séquence gauche met en correspondance, dans les 2 vues 2 D, les projections du même point réel de la scène en 3 D. C'est ce vecteur disparité qui permet d'extrapoler l'image clé de droite à partir de l'image clé de gauche.

Le calcul de ces vecteurs disparités se déduit d'une manière très simple des calculs des vecteurs vitesse apparente tels que décrits précédemment.

En effet, le vecteur disparité correspond à deux vues de la même scène 3D mais sous deux angles différents pour réaliser l'effet stéréoscopique.

Ces deux vues correspondent à un déplacement apparent de la scène 3D figée donc statique, déplacement correspondant aux 2 points de vue.

Ainsi, il suffit de calculer les vecteurs vitesse apparente pour une scène statique ayant subi ce déplacement, et selon la méthode précédemment exposée lors du calcul des vecteurs vitesse de l'image clé d'une séquence monoculaire. Ces vecteurs vitesse sont des vecteurs vitesse fictifs permettant de calculer l'image de droite à partir de l'image de gauche, ces images correspondant à un même instant t et non à des instants différents comme dans le cas de vecteurs vitesse réels. On peut ainsi calculer les vecteurs disparités de tous les points d'image à un instant t.

L'ensemble des vecteurs disparité pour une image clé forment le champ de disparité. A partir de ce champ et de l'image clé correspondante, une extrapolation compensée en disparité est réalisée à l'étape 14.

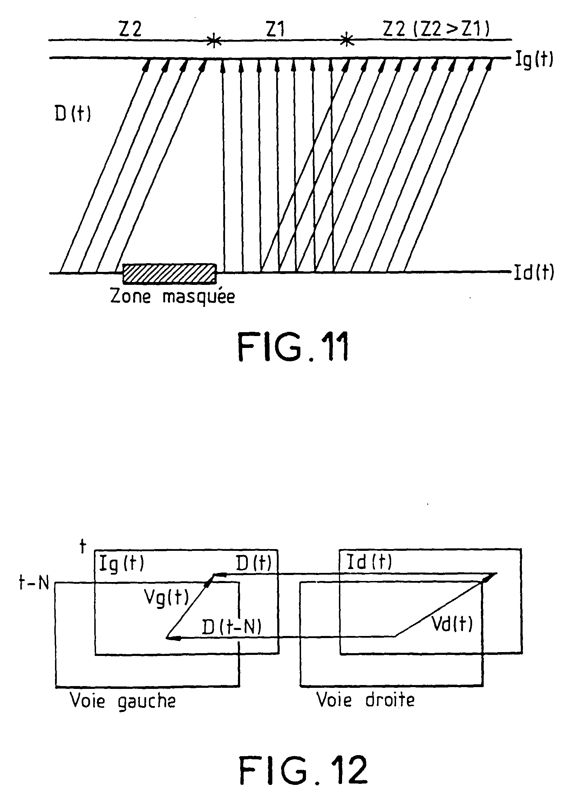

L'extrapolation de l'image de droite Id(t) à partir de l'image de gauche Ig(t) et du champ de disparité D(t) de cette image est explicité à l'aide de la figure 11.

Chaque pixel de Ig(t) est projeté selon la direction inverse du vecteur disparité sur l'image Id(t). En cas de conflit, c'est-à-dire si plusieurs pixels de Ig(t) sont projetés sur un même point, le choix du pixel le plus proche de la caméra est fait comme vu précédemment lors de la génération d'une image monoculaire. La carte distance associée aux images clés permet cette sélection.

Les pixels de l'image Id(t) sur lesquels ne parvient aucune projection, comme représenté en figure 11, correspondent normalement aux zones vues dans Id(t) et masquées dans Ig(t). Ils sont calculés à l'étape 15 par l'algorithme de rendu qui a permis de générer Ig(t). Ces pixels reconstitués sont ajoutés, à l'étape 16, à l'image obtenue à l'étape 14.

Aux images clés de la séquence de droite ainsi disponibles à l'étape 16 sont adjointes les cartes vecteurs vitesse calculées à l'étape 17. Le champ de vecteurs vitesse Vd(t) entre deux images clé consécutives de droite Id(t-N) et Id(t) est déduit du champ de vecteurs vitesse Vg(t) entre deux images clés consécutives de gauche Ig(t-N) et Ig(t) et des champs de disparité binoculaire D(t-N) et D(t) de ces images clés par la relation symbolisée par la figure 12 :

$$Vg(t) - Vd(t) + D(t-N) - D(t) = 0$$

Dans la pratique, en supposant que la disparité d'un pixel varie peu d'une image clé à l'autre, les vitesses apparentes de 2 points mis en correspondance dans les vues droite et gauche par le vecteur de disparité sont quasi égales. Ainsi la carte des vecteurs vitesse et distance de l'image clé de droite peut être déduite de celle de gauche et de son champ de disparité.

L'étape 18 réalise ensuite l'interpolation temporelle selon la méthode déjà exposée. Celle-ci est également effectuée à l'étape 19 sur la voie de gauche pour fournir, en juxtaposant à l'étape 20 ces séquences d'images ainsi générées aux images clés, la séquence en stéréoscopie.

Les méthodes de calcul utilisées prou la détermination des valeurs déplacement on été données ici à titre indicatif.

Ainsi les vecteurs à vitesse peuvent tout aussi bien être calculés à partir des données de modélisation de la scène à 2 instants t et t + dt.

**Revendications**

1. Procédé de génération d'image de synthèse à partir de données de structure modélisant une scène en 3 dimensions à visualiser et de données représentant une évolution apparente relative de la scène par rapport à un point de vue (1, 11), les données de structure permettant de calculer des coordonnées de points de la scène en 3 dimensions et les données d'évolution permettant de calculer des coefficients de transformations géométriques associées à ces points, où l'on génère, à partir des données de structure et d'un algorithme de rendu (2,12) une image en deux dimensions représentant la scène vue de ce point de vue, caractérisé en ce qu'on associe à chaque point de l'image en 2 dimensions un point correspondant de la scène en trois dimensions et un vecteur déplacement représentant l'évolution de ce point d'image due à l'évolution apparente relative du point correspondant de la scène en 3 dimensions par rapport au point de vue, on calcule ensuite les vecteurs de déplacement des pixels de l'image générée (3,13) à partir des coordonnées et des coefficients des points associés de la scène en 3 dimensions pour les utiliser dans la génération d'au moins une autre image en 2 dimensions (4, 14, 18, 19) à partir de la première, puis on présente les images générées sur un écran de visualisation.

2. Procédé selon la revendication 1, caractérisé en ce que les données d'évolution comprennent des données d'évolution du point de vue d'observation de la scène en trois dimensions correspondant à un déplacement apparent de la scène statique définie à un instant t pour calculer par extrapolation spatiale à partir d'une image de référence générée à partir de l'algorithme de rendu (12) et correspondant à un point de vue de la scène à l'instant t, et des vecteurs déplacement appelés vecteurs disparité (13) une deuxième image (14) correspondant à un deuxième point de vue de la scène au même instant t pour former une vue stéréoscopique (20).

**3.** Procédé selon la revendication 1, caractérisé en ce que les données d'évolution comprennent les données d'évolution temporelle de la scène en 3 dimensions pour calculer, par interpolation temporelle, à partir d'une image de référence (2) générée en utilisant l'algorithme de rendu et correspondant à la scène en 3 dimensions à l'instant t et des vecteurs déplacement appelés vecteurs vitesse (3), une image intermédiaire (4) correspondant à un instant différent.

**4.** Procédé selon la revendication 3, caractérisé en ce qu'une séquence d'images monoculaire (5) est constituée d'images clés (2) générées à partir de l'algorithme de rendu de la scène en 3 dimensions et d'images intermédiaires réalisées par interpolation temporelle (4), à partir de ces images clés et des vecteurs vitesse calculés (3).

**5.** Procédé selon les revendications 2 et 3, caractérisé en ce qu'une séquence binoculaire (20) est composée d'une voie de référence constituée d'images clés (12) générées à partir de l'algorithme de rendu et d'images intermédiaires (19) réalisées par interpolation temporelle, et d'une voie conjuguée constituée d'images clés (14) réalisées par extrapolation des images clés de la voie de référence à partir de leurs vecteurs disparité et d'images intermédiaires (18) réalisées par interpolation temporelle de ces images clés pour la réalisation de l'effet stéréoscopique.

**6.** Procédé selon la revendication 5, caractérisé en ce que les vecteurs vitesse d'une image clé de la voie conjuguée sont calculées à partir des vecteurs vitesse et des vecteurs disparité de l'image clé correspondante de la voie de référence.

**7.** Procédé selon les revendications 2, 5 ou 6, caractérisé en ce que les zones dans l'image conjuguée non mises en correspondance par les vecteurs disparité sont générées par l'algorithme de rendu.

**8.** Procédé selon la revendication 4, caractérisé en ce qu'il attribue à chaque image clé K(t) un premier champ de vecteurs vitesse apparente $V^-$ dont les vecteurs inverses définissent, pour chaque pixel de l'image clé K(t), son déplacement de cette image à l'image clé suivante K(t +N), un deuxième champ de vecteurs vitesse apparente $V^+$ définissant le déplacement de ces pixels depuis l'image clé précédente K(t-N) à l'image clé K(t) ces vecteurs étant calculés à partir des données de structure et d'évolution de la scène en trois dimensions, une carte distance associant à chaque pixel de l'image clé (K(t) la distance du point visible correspondant de la scène en trois dimensions au point d'où est vue la scène, et en ce que l'interpolation entre deux images clés K(t-N) et K(t) est effectuée par projection inverse des vecteurs $V^+$ de l'image clé K(t) sur l'image intermédiaire et l'image clé K(t-N) et par projection inverse des vecteurs $V^-$ de l'image clé K(t-N) sur l'image intermédiaire et l'image clé K((t).

**9.** Procédé selon la revendication 8, caractérisé en ce que lors de l'interpolation temporelle d'une image intermédiaire I(t-n) entre deux images clés K(t-N) et K(t), un conflit de projection entre vecteurs $V^+$ de l'image K(t) ou entre vecteurs $V^-$ de l'image K(t-N) sur l'image intermédiaire I(t-n), c'est-à-dire l'attribution de plusieurs vecteurs à un même pixel de l'image intermédiaire, chaque vecteur étant attribué au pixel le plus proche de sa projection sur l'image intermédiaire, est résolu en choisissant comme vecteur élu celui dont l'origine est le pixel de l'image clé ayant la plus faible distance et en ce que les vecteurs éliminés ne sont pas pris en compte pour l'interpolation temporelle de cette image intermédiaire.

**10.** Procédé selon la revendication 8 ou 9, caractérisé en ce que lors de l'interpolation temporelle d'une image intermédiaire I(t-n) entre deux images clés K(t-N) et K(t), une première étape définit des zones "apparaissantes" et "disparaissantes" pour chaque image clé, les zones apparaissantes sur K(t) correspondant à des zones ou pixels non pointés par les vecteurs vitesse apparente $V^-$ inverses de l'image K(t-N), les zones disparaissantes sur K(t-N) correspondant à des zones ou pixels non pointés par les vecteurs vitesse apparente $V^+$ inverse de l'image K(t), les vecteurs $V^+$ aboutissant aux zones apparaissantes et les vecteurs V- aboutissant aux zones disparaissantes étant étiquetés en fonction de ces zones, une deuxième étape définit des zones apparaissantes et disparaissantes de l'image intermédiaire comme correspondant respectivement aux projections sur cette image intermédiaire des vecteurs $V^+$ et $V^-$ étiquetés comme étiquetés comme apparaissants et disparaissants, une troisième étape exploite ces zones dans l'interpolation temporelle de cette image intermédiaire.

**11.** Procédé selon la revendication 10, caractérisé en ce que les zones apparaissantes et disparaissantes de l'image intermédiaire I(t-n) sont générées respectivement et exclusivement à partir des zones apparaissantes correspondantes de l'image clé K(t) et des zones disparaissantes correspondantes de l'image clé K(t-N), les autres zones dites "normales" étant interpolées en prenant en compte les zones correspondantes à la fois de K(t-N) et K(t).

**12.** Procédé selon l'une des revendications 8 à 11, caractérisé en ce que la gestion d'erreurs d'interpolation se fait par l'intermédiaire d'un masque prévisionnel des erreurs d'interpolation correspondant aux zones des images intermédiaires pour lesquelles les vecteurs V$^+$ et V$^-$ ne sont pas cohérents.

**Patentansprüche**

1. Verfahren zur Erzeugung von Synthesebildern aus Strukturdaten, die eine anzuzeigende, dreidimensionale Szene darstellen, und aus Daten, die eine erkennbare Relativbewegung der Szene relativ zu einem Betrachtungspunkt (1, 11) darstellen, wobei die Strukturdaten eine Berechnung der Koordinaten der Punkte der dreidimensionalen Szene und die Bewegungsdaten eine Berechnung der zu diesen Punkten gehörenden geometrischen Transformationskoeffizienten ermöglichen, oder aus den Strukturdaten und einem Dekodieralgorithmus (2, 12) ein zweidimensionales Bild erzeugt wird, das die von diesem Betrachtungspunkt betrachtete Szene darstellt,
dadurch gekennzeichnet, daß
jedem Punkt des zweidimensionalen Bildes ein entsprechender Punkt der dreidimensionalen Szene und ein Verschiebevektor zugeordnet werden, der die Bewegung des Bildpunktes aufgrund der erkennbaren Bewegung relativ zu dem entsprechenden Punkt der dreidimensionalen Szene relativ zu dem Betrachtungspunkt darstellt, daß dann die Verschiebevektoren der erzeugten Bildpixel (3, 13) aus den Koordinaten und den Koeffizienten der der dreidimensionalen Szene zugeordneten Punkte berechnet werden, um sie bei der Erzeugung wenigstens eines weiteren zweidimensionalen Bildes (4, 14, 18, 19) aus dem ersten Bild zu verwenden, und daß dann die erzeugten Bilder auf einem Bildschirm dargestellt werden.

2. Verfahren nach Anspruch 1, dadurch gekennzeichnet, daß die Bewegungsdaten Bewegungsdaten für den Betrachtungspunkt der dreidimensionalen Szene enthalten, die einer erkennbaren Verschiebung der statischen Szene in einem Zeitpunkt t entsprechen, um durch eine räumliche Extrapolation aus einem Referenzbild, das aus dem Dekodieralgorithmus (12) erzeugt wurde und einem Betrachtungspunkt der Szene im Zeitpunkt t entspricht, und mit Disparitätsvektoren (13) bezeichnete Verschiebevektoren ein zweites Bild (14), das einem zweiten Betrachtungspunkt der Szene im selben Zeitpunkt t entspricht zu berechnen, um eine stereoskopische Wiedergabe (20) zu bilden.

3. Verfahren nach Anspruch 1, dadurch gekennzeichnet, daß die Bewegungsdaten zeitliche Bewegungsdaten der dreidimensionalen Szene enthalten, um durch eine zeitliche Interpolation aus einem Referenzbild (2), das unter Anwendung des Dekodieralgorithmus erzeugt wird und der dreidimensionalen Szene im Zeitpunkt t entspricht, und mit Bewegungsvektoren (3) bezeichneten Verschiebevektoren ein Zwischenbild (4) zu berechnen, das einem anderen Zeitpunkt entspricht.

4. Verfahren nach Anspruch 3, dadurch gekennzeichnet, daß eine Folge von monokularen Bildern (5) aus Schlüsselbildern (2) gebildet wird, die aus dem Dekodieralgorithmus der dreidimensionalen Szene und aus Zwischenbildern erzeugt werden, die durch eine zeitliche Interpolation (4) aus den Schlüsselbildern und den berechneten Bewegungsvektoren (3) gebildet werden.

5. Verfahren nach Anspruch 2 und 3, dadurch gekennzeichnet, daß eine binokulare Folge (20) zusammengesetzt ist aus einem Referenzweg mit Schlüsselbildern (12), die aus dem Dekodieralgorithmus und den durch zeitliche Interpolation gebildeten Zwischenbildern (19) erzeugt werden, und aus einem vereinigten Weg mit durch eine Extrapolation der Ausgangsbilder gebildeten Schlüsselbildern (14) des Referenzweges aus ihren Disparitätsvektoren und Zwischenbildem (18), die durch eine zeitliche Interpolation dieser Ausgangsbilder für die Bildung des stereoskopischen Effektes gebildet werden.

6. Verfahren nach Anspruch 5, dadurch gekennzeichnet, daß die Bewegungsvektoren eines Zwischenbildes des vereinigen Weges aus den Bewegungsvektoren und den Disparitätsvektoren des dem Referenzweg entsprechenden Schlüsselbildes berechnet werden.

7. Verfahren nach Anspruch 2, 5 oder 6, dadurch gekennzeichnet, daß die Bereiche des vereinigten Bildes, die durch die Disparitätsvektoren nicht in Übereinstimmung gebracht wurden, durch den Dekodieralgorithmus erzeugt werden.

8. Verfahren nach Anspruch 4, dadurch gekennzeichnet, daß jedem Schlüsselbild K(t) ein erstes Feld von Bewegungsvektoren V$^-$ zugeordnet wird, deren inverse Vektoren für jedes Pixel des Schlüsselbildes (K(t)) bei dem folgenden Schlüsselbild (K(t+N)) von diesem Bild verschoben werden, wobei ein zweites Feld von Bewegungsvektoren V⁺ die Verschiebung dieser Pixel von dem vorangehenden Schlüsselbild K(t-N) zu dem Schlüsselbild (K(t) bestimmen, daß diese Vektoren aus den Strukturdaten und der Bewegung der dreidimensionalen Szene berechnet werden, daß eine Entfernungskarte bei jedem Pixel des Schlüsselbildes (K(t) die Entfernung des der dreidimensionalen Szene entsprechenden sichtbaren Punkts zu dem Punkt entspricht, von dem aus die Szene betrachtet wird, und daß die Interpolation zwischen zwei Schlüsselbildern K(t-N) und K(t) durch eine inverse Projektion der Vektoren V⁺ des Schlüsselbildes (K(t) auf das Zwischenbild und das Schlüsselbild K(t-N) und durch inverse Projektion der Vektoren V⁻ des Schlüsselbildes K(t-N) auf das Zwischenbild und das Schlüsselbild K(t) erfolgt.

9. Verfahren nach Anspruch 8, dadurch gekennzeichnet, daß bei der zeitlichen Interpolation eines Zwischenbildes I (t-n) zwischen zwei Schlüsselbildern K(t-N) und K(t) ein Konflikt in der Projektion zwischen den Vektoren V⁺ des Bildes K(t) oder zwischen Vektoren V⁻ des Bildes K(t-N) auf dem Zwischenbild I(t-n), das heißt der Beitrag mehrerer Vektoren zu demselben Pixel des Zwischenbildes, daß jeder Vektor dem nächstliegenden Pixel seiner Projektion auf das Zwischenbild zugeordnet wird, dadurch gelöst wird, daß als gelesener Vektor derjenige gewählt wird, dessen Ursprung das Pixel des Schlüsselbildes mit der geringsten Entfernung ist und daß die beseitigten Vektoren für die zeitliche Interpolation dieses Zwischenbildes nicht berücksichtigt werden.

10. Verfahren nach Anspruch 8 oder 9, dadurch gekennzeichnet, daß bei der zeitlichen Interpolation eines Zwischenbildes I(t-n) zwischen zwei Schlüsselbildern K(t-N) und K(t) ein erster Schritt die "erscheinenden" und "verschwindenden" Bereiche für jedes Schlüsselbild definiert, daß die erscheinenden Bereiche auf K(t) den Bereichen oder Pixeln entsprechen, die durch die inversen Bewegungsvektoren V⁻ des Bildes K(t-N) nicht markiert werden, daß die auf K(t-N) verschwindenden Bereiche K(t-N) den Bereichen entsprechen, wo die Pixel durch die inversen Bewegungsvektoren V⁺ des Zwischenbildes K(t) nicht markiert werden, daß die an die erscheinenden Bereiche angrenzenden Vektoren V⁺ und die an die verschwindenden Bereiche angrenzenden Vektoren V⁻ als Funktion dieser Bereiche etikettiert werden, daß ein zweiter Schritt die erscheinenden und verschwindenden Bereiche des Zwischenbildes als jeweils zu den Projektionen auf dieses Zwischenbild der etikettierten Vektoren V⁺ und V⁻ erscheinend und verschwindende definiert werden, daß ein dritter Schritt die Bereiche in der zeitlichen Interpolation dieses Zwischenbildes auswertet.

11. Verfahren nach Anspruch 10, dadurch gekennzeichnet, daß die erscheinenden und verschwindenden Bereiche des Zwischenbildes I(t-n) jeweils und ausschließlich aus den entsprechenden erscheinenden Bereichen des Schlüsselbildes K(t) und den entsprechenden verschwindenden Bereichen des Schlüsselbildes K(t-N) erzeugt werden und die anderen, als "normal" bezeichneten Bereiche unter Berücksichtigung der Bereiche interpoliert werden, die gleichzeitig K(t-N) und K(t) entsprechen.

12. Verfahren nach einem der Ansprüche 8 bis 11, dadurch gekennzeichnet, daß die Verwaltung der Interpolationsfehler mittels einer Prognosemaske für Interpolationsfehler erfolgt, die den Bereichen der Zwischenbilder entsprechen, für die die Vektoren V⁺ und V⁻ nicht kohärent sind.

**Claims**

1. Process for generating a synthesis image from structure data modelling a three-dimensional scene to be displayed and from data representing an apparent relative alteration in the scene with respect to a viewpoint (1, 11), the structure data making it possible to calculate coordinates of points of the three-dimensional scene and the alteration data making it possible to calculate coefficients of geometric transformations associated with these points, where the structure data and a rendition algorithm (2, 12) are used to generate a two-dimensional image representing the scene viewed from this viewpoint, characterized in that with each point of the two-dimensional image there are associated a corresponding point of the three-dimensional scene and a displacement vector representing the alteration in this image point due to the apparent relative alteration in the corresponding point of the three-dimensional scene with respect to the viewpoint, the displacement vectors of the pixels of the image generated (3, 13) are thereafter calculated from the coordinates and from the coefficients of the associated points of the three-dimensional scene so as to use them in the generation of at least one other two-dimensional image (4, 14, 18, 19) from the first, then the images generated are presented on a display screen.

2. Process according to Claim 1, characterized in that the alteration data comprise data pertaining to the of the viewpoint of observation of the three-dimensional scene corresponding to an apparent displacement of the static scene defined at an instant t so as to calculate by spatial extrapolation on the basis of a reference image generated on the basis of the rendition algorithm (12) and corresponding to a viewpoint of the scene at the instant t, and displacement vectors referred to as disparity vectors (13), a second image (14) corresponding to a second viewpoint of the scene at the same instant t so as to form a stereoscopic view (20).

3. Process according to Claim 1, characterized in that the alteration data comprise the data pertaining to the temporal alteration in the three-dimensional scene so as to calculate, by temporal interpolation, on the basis of a reference image (2) generated by using the rendition algorithm and corresponding to the three-dimensional scene at the instant t and displacement vectors referred to as velocity vectors (3), an intermediate image (4) corresponding to a different instant.

4. Process according to Claim 3, characterized in that a monocular sequence of images (5) is made up of key images (2) generated on the basis of the algorithm for rendering the three-dimensional scene and of intermediate images produced by temporal interpolation (4), on the basis of these key images and of the calculated velocity vectors (3).

5. Process according to Claims 2 and 3, characterized in that a binocular sequence (20) is composed of a reference path consisting of key images (12) generated on the basis of the rendition algorithm and of intermediate images (19) produced by temporal interpolation, and of a conjugate path consisting of key images (14) produced by extrapolation of the key images of the reference path on the basis of their disparity vectors and of intermediate images (18) produced by temporal interpolation of these key images for the production of the stereoscopic effect.

6. Process according to Claim 5, characterized in that the velocity vectors of a key image of the conjugate path are calculated on the basis of the velocity vectors and of the disparity vectors of the corresponding key image of the reference path.

7. Process according to Claims 2, 5 or 6, characterized in that the zones in the conjugate image which are not matched up by the disparity vectors are generated by the rendition algorithm.

8. Process according to Claim 4, characterized in that it allocates to each key image $K(t)$ a first apparent velocity vector field $V^-$ whose inverse vectors define, for each pixel of the key image $K(t)$, its displacement from this image to the next key image $K(t+N)$, a second apparent velocity vector field $V^+$ defining the displacement of these pixels from the previous key image $K(t-N)$ to the key image $K(t)$, these vectors being calculated on the basis of the structure data and alteration data of the three-dimensional scene, a distance map associating with each pixel of the key image $K(t)$ the distance of the corresponding visible point of the three-dimensional scene at the point from which the scene is viewed, and in that the interpolation between two key images $K(t-N)$ and $K(t)$ is performed by inverse projection of the vectors $V^+$ of the key image $K(t)$ onto the intermediate image and the key image $K(t-N)$ and by inverse projection of the vectors $V^-$ of the key image $K(t-N)$ onto the intermediate image and the key image $K(t)$.

9. Process according to Claim 8, characterized in that during the temporal interpolation of an intermediate image $I(t-n)$ between two key images $K(t-N)$ and $K(t)$, a conflict of projection between vectors $V^+$ of the image $K(t)$ or between vectors $V^-$ of the image $K(t-N)$ onto the intermediate image $I(t-n)$, that is to say the allocation of several vectors to one and the same pixel of the intermediate image, each vector being allocated to the pixel closest to its projection on the intermediate image, is resolved by choosing as elected vector the one whose origin is the pixel of the key image having the smallest distance and in that the eliminated vectors are not taken into account for the temporal interpolation of this intermediate image.

10. Process according to Claim 8 or 9, characterized in that during the temporal interpolation of an intermediate image $I(t-n)$ between two key images $K(t-N)$ and $K(t)$, a first step defines "appearing" and "disappearing" zones for each key image, the appearing zones on $K(t)$ corresponding to zones or pixels which are not pointed at by the inverse apparent velocity vectors $V^-$ of the image $K(t-N)$, the disappearing zones on $K(t-N)$ corresponding to zones or pixels which are not pointed at by the inverse apparent velocity vectors $V^+$ of the image $K(t)$, the vectors $V^+$ culminating at the appearing zones and the vectors $V^-$ culminating at the disappearing zones being tagged as a function of these zones, a second step defines appearing and disappearing zones of the intermediate image as corresponding respectively to the projections onto this intermediate image of the vectors $V^+$ and $V^-$ tagged as appearing and disappearing, a third step exploits these zones in the temporal interpolation of this intermediate image.

11. Process according to Claim 10, characterized in that the appearing and disappearing zones of the intermediate image $I(t-n)$ are generated respectively and exclusively on the basis of the corresponding appearing zones of the key image $K(t)$ and of the corresponding disappearing zones of the key image $K(t-n)$, the other so-called "normal" zones being interpolated by taking account of the corresponding zones of both K(t-N) and K(t).

12. Process according to one of Claims 8 to 11, characterized in that the management of interpolation errors is carried out by way of a forecast mask of the interpolation errors corresponding to the zones of the intermediate images for which the vectors $V^+$ and $V^-$ are not consistent.

```
┌─────────────────────┐
│   Modèle  3D        │╌╌ 1
│   + cinématique     │
└─────────────────────┘
```

Génération
2 ╌ des images
clés

Calcul des cartes vecteurs ╌ 3
vitesse et distance pour
les images clés

Génération des images ╌ 4
intermédiaires par
interpolation temporelle

Séquence  2 D ╌ 5

# FIG. 1

K (t+N)

V- (t)

K (t)

V+ (t)

K (t-N)

# FIG.2

FIG.3

FIG.4

Contribution de
Rotation /zoom

Image intermédiaire I (t-n)
entre deux images clés:
K (t-N) et K (t)

— 4a

Projection sur I(t-n) des
vecteurs vitesse $V^+(t)$ et $V^-(t-N)$
et
Gestion des conflits en fonction de Z

— 4b

Classement des pixels:
visibles, masqués apparaissant, masqués
disparaissant

— 4c

Calcul des luminances $I = \propto P + (1-\propto) S$

— 4d

Gestion des erreurs d'interpolation

— 4e

# FIG.5

# FIG.6

EP 0 725 957 B1

FIG.7

Marquage des zones
disparaissant dans K(t-N)

8a

Marquage des zones
apparaissant dans K(t)

8b

Marquage des zones
apparaissant et
disparaissant dans I(t-n)

8c

FIG.8

18

temps

séquence gauche          séquence droite

▨ images synthétisées

☐ images interpolées temporellement

▥ images extrapolées gauche –> droite

# FIG.9

Modèle 3 D
+ cinématique — 11

Génération des images
clés de gauche et des
cartes vecteurs vitesse
et distance associées — 12

Calcul du champ de
disparité des
images clés — 13

Génération des images
clés droite par extrapolation compensée en
disparité — 14

Génération
des zones
occultes — 15

Addition
des zones — 16

Génération des images
intermédiaires par
interpolation
temporelle pour
la séquence gauche — 19

Calcul de la carte
vecteurs vitesse — 17

Génération des images
intermédiaires par
interpolation
temporelle pour
la séquence droite — 18

Séquence 3D — 20

FIG.10

FIG. 11

FIG. 12